(19) Europäisches Patentamt
European Patent Office
Office européen des brevets

(11) **EP 2 752 691 A1**

(12) **EUROPEAN PATENT APPLICATION**

(43) Date of publication:
**09.07.2014 Bulletin 2014/28**

(51) Int Cl.:
*G02B 5/18* (2006.01)

(21) Application number: **13275003.5**

(22) Date of filing: **08.01.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **BAE Systems PLC
London SW1Y 5AD (GB)**

(72) Inventor: **The designation of the inventor has not
yet been filed**

(74) Representative: **BAE SYSTEMS plc
Group IP Department
Farnborough Aerospace Centre
Farnborough
Hampshire GU14 6YU (GB)**

(54) **Variable-efficiency diffraction grating**

(57)    A diffraction grating 1 includes a surface 12 having grooves 14 therein, each groove 14 providing a diffracting surface for light incident upon the diffracting surface. The grooves 14 are separated from each other by lands 20 upon the surface 12. The lands 20 are of predetermined varying width, whereby the diffractive efficiency of the grating 1 varies across the extent of the grating 1.

FIG. 1

**Description**

This invention relates to diffraction gratings and to the manufacture thereof.

It sometimes is desirable that the efficiency of a diffraction grating should vary across its extent, so that the diffraction grating provides a differing effect in different regions of its surface. Usually this is achieved by controlling the thickness or other property of an optical coating applied to the surface of the grating. The degree of variation obtainable however may not to enough, or it may be insufficiently precise. At least in some embodiments the present invention can provide a variable-efficiency diffraction grating in which these problems are mitigated. The invention also provides a method of making the master gratings from which the diffraction gratings of the invention are replicated.

In one aspect the invention provides a diffraction grating comprising a surface having grooves therein, each groove having a diffracting surface, the grooves being separated from each other by lands of the first-mentioned surface of predetermined varying width, whereby the diffractive efficiency of the grating varies across the extent of the grating.

The grating may comprise blazed grooves in a surface, the grooves being separated by unblazed lands of the surface of predetermined varying width.

The diffracting surfaces of the grooves may be disposed non-orthogonally to the first-mentioned surface.

In particular, the grating may be a blazed grating.

Thus, another aspect the invention provides a blazed diffraction grating comprising grooves in a surface, the grooves being separated by un-blazed lands of said surface of predetermined varying width.

The lands may vary in width from groove to groove. By this we do not mean that each land is necessarily of different width to its immediate neighbours, although such a construction is within the invention. We also contemplate within this statement that groups of adjacent lands may have the same width, but this width may be different to that of a land or group of lands elsewhere on the grating.

Alternatively or in addition a land may vary in width along its length.

For a groove which tapers from top to bottom, for example a triangular groove of a blazed grating, the depth of the groove will be a function of its width. Thus, for grooves of constant pitch, increasing the width of the intervening lands decreases the width of the grooves and thus their depth. The efficiency of a grating with such grooves is a function of the groove depth, and so the local efficiency of a grating can be established by controlling the width of the groove-separating lands during manufacture of the grating. For gratings manufactured by replication this may be done by controlling the land width in the master grating.

In this specification, the width of a groove or land is its dimension measured in the direction of successive pitches of the grating. The length of the groove or land is its longitudinal dimension locally orthogonal to the pitch dimension. The depth of a groove is its dimension into the surface in which it is defined.

It will be appreciated from the foregoing that the depth of the groove may vary from groove to groove. Alternatively or in addition, a groove may vary in depth along its length.

It also will be appreciated that the width of a land or land may be varied so that the pitch of the grooves may be varied across the extent of the grating. By this means it is possible, in addition or alternatively to varying the local efficiency of the grating, to introduce optical power into the grating for example to correct for angular distortion in an image transmitted or reflected by the grating.

The invention also provides a master grating and/or replicator mould arranged to produce a grating as set forth above.

The invention further provides a method of manufacturing such a master grating, comprising forming on a surface of a substrate a mask defining lands of varying width and removing unmasked material from the substrate to form grooves. When the substrate comprises a crystal, the method may comprising forming said surface of the substrate at an angle relative to a crystal plane of the substrate such that removal of the unmasked material is effected preferentially parallel to the crystal plane.

The unmasked material may be removed by anisotropic wet etching.

The invention will be described, merely by way of example only, with reference to the accompanying drawings, wherein:

Figure 1 is a section through a diffraction grating according to the invention; and

Figure 2 illustrates the manufacture of a master grating according to the invention.

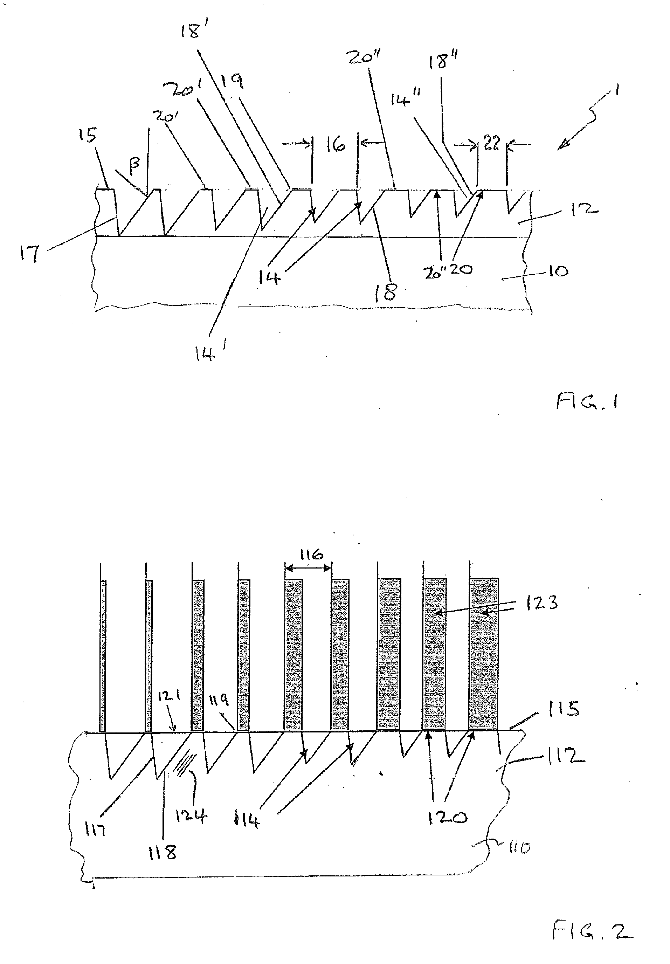

Referring to Figure 1, a diffraction grating 1 comprises a glass substrate 10 on which there is a polymer layer 12. The layer 12 has impressed therein a series of grooves 14 in its top surface 15, the distance or pitch 16 between grooves 14 being such that the grooves 14 diffract a portion of the light incident thereon.

The performance of a grating 1 in which the grooves 14 are immediately adjacent each other is governed by the diffraction grating equation:

$$d(\sin\theta m + \sin\theta i) = m\lambda$$

Where d is the grating pitch, $\theta i$ is the angle of incidence of the light on the grating, $\theta m$ is the angle at which the light is diffracted relative to a normal to the grating, $\lambda$ is

the wavelength of the light and m is an integer, which may be positive, negative or zero.

Generally, a grating 1 is configured so as to operate at a preferred order of diffraction e.g. m=1, 2 or -1, -2.

When m=0 or "zero order" the light is either transmitted though the grating 1 without diffraction or, in the case of a reflective grating, specularly reflected from the grating 1.

The efficiency of the grating is the proportion of the incident light which is diffracted in the demand order (or orders, if the grating is to operate as a multiple order grating).

In this embodiment, the grating 1 of Figure 1 is a blazed grating i.e. one which is configured to have optimum efficiency for monochromatic light of a particular wavelength and at a particular range of incident angles. Thus the grooves 14 have operative blazed surfaces 18 which are inclined to the surface 15 of the layer 12 so that they are perpendicular to the blaze angle β. This angle is chosen so that the grating 1 is most efficient at the operational wavelength and range of incident angles. The grooves 14 as illustrated are triangular in shape, and are formed by three facets: a blaze surface 18, a land surface 20 and a anti-blaze surface 17. It is usually required that blazed gratings diffract most efficiently in either the positive or negative orders. For this to happen, the anti-blaze facet 17 should be as perpendicular to the surface 15 as possible. The manufacturing process used to create a grating 1, which includes but is not limited to replication and coating, may dictate that the angle of the anti-blaze facet 17 deviates from perpendicular to the surface 15.

As noted, the grooves 14 are of constant pitch 16. More specifically, their trailing edges 19 formed by the intersections of the blazed surfaces 18 with the surface 15 of the layer 12 are at constant pitch. However, according to the invention, the grooves are separated by lands 20 of predetermined width 22 which is chosen so as to vary from land to land. The geometry of the grooves 14 is constant, and consequently the depth of each groove 14 is determined by the width of its immediately-preceding land. Thus it can be seen that groove 14' is preceded by a relatively narrow land 20' and thus is relatively deep. In contrast, groove 14" is preceded by a relatively wide land 20" and thus is relatively shallow.

This variation in land width and groove depth results in the diffraction efficiency of the grating 1 being different at different points on its surface 15. Thus most of the light incident on the area defined by the land 20' and groove 14' will be received by the inclined blazed surface 18' and is diffracted into the desired order. Only the relatively small proportion of the incident light which is received by the land 20' is transmitted or reflected in the zero order, and thus the efficiency of this area of the grating 1 is relatively high. On the other hand, light incident on the area defined by the land 20" and groove 14" will be received mostly by the land 20", and only a relatively small proportion by the blazed surface 18" of the groove 14". Thus the efficiency of this area of the grating 1 will be relatively low.

In this particular embodiment pairs of adjacent lands e.g. 20' or 20" are shown to be of the same width, that width being different to the width of adjacent pairs of lands. Other patterns are of course possible: for example if each land 20 is of different width to its neighbours a more evenly graded variation in efficiency across the surface of the grating 1 can be obtained. Alternatively, if substantial numbers of adjacent lands 20 in one area of the grating 1 are of the same width, and substantial numbers of adjacent lands 20 in another area of the grating 1 have a different width, then a grating 1 with well-defined areas of different efficiency can be obtained. Indeed, if required a step-change between areas of marked by different efficiency can be achieved.

As noted, Figure 1 is a section through the grating. The width of the lands 20 and the depth of the grooves 14 may also vary along their length, i.e. into or out of the plane of the figure. This enables the efficiency of for example the area 14", 20" and/or 14', 20' to be varied orthogonally to the variation from groove to groove.

The variation in land width normally is effected during manufacture by maintaining the position of each intersection 19 between a blazed surface 18 and land 20 constant, and varying the land width away from it. Thereby the pitch 16 of the blazed surface edges 19 is held constant and the variation in groove depth is achieved.

It will be appreciated that the pitch 16 of the grooves 14 may also be varied, if it is required for example to give the grating 1 optical power so that it operates also as a lens or non-planar mirror. This can enable errors in an image carried by the incident light to be corrected. When designing a grating 1 having both varying pitch 16 and varying land 20 width, the pitch 16 variation is set by adjusting the distance between successive edges 19, and the land 20 width is then set from the adjusted edges 19. Thus the efficiency variation is effectively superimposed on the pitch variations.

Whilst the diffraction grating 1 has been described as planar, the invention may also be applied to diffraction gratings defined on curved surfaces.

Figure 2 illustrates manufacture of a master grating 110 for the replication of the diffraction grating 1 of Figure 1.

The master grating 110 comprises a crystal of silicon 112 disposed on a suitable substrate, not shown. When manufactured, the crystal has cut into its surface 115 grooves 114 of shape and pitch identical to those of the eventual grating 1, subject only to adjustments as will be familiar to those skilled in the art to allow for coatings which may be applied, and for dimensional changes which may arise during the replication process.

To cut the grooves 114, the initially-planar surface 115 is provided with an etch-resistant mask by a known method. Thus the surface 115 is coated with a film of a negative electron-beam resist 121 e.g. ZEP-520 (from "Zeon Corporation", Japan) or AR-N7700 (from "Allresist", Germany). This film is then traversed by a scanning electron beam 123 to expose the resist and forms a mask defining the lands 120. The width of the scanning pattern is varied so that the required variation in land 120 width is reproduced in the mask. The unexposed portions of the resist film 121 are then removed, and the thus-revealed portions of the surface 115 are subjected to anisotropic wet etching. To facilitate accurate and efficient etching the orientation of the silicon crystal 112, shown symbolically at 124, is chosen so that the blazed surfaces 118 lie parallel to a selected crystal plane of the silicon whereby the etch rate parallel to the crystal plane is much faster than the etch rate perpendicular to the crystal plane, thus defining the blazed surfaces 118 at the correct angle.

Other known techniques may be used to provide the grooves 114, for example ion beam milling, but this may not yield smooth crystalline surfaces, and the process may not control the blaze length and depth to the same degree as is obtainable by anisotropic wet etching of a suitably oriented crystal 112 as described above.

The master grating 110 may be used to produce one or more replication moulds ("stampers") by known techniques, and the stampers in turn then used to produce diffraction gratings 1.

A diffraction grating 1 includes a surface 12 having grooves 14 therein, each groove 14 is arranged to provide a diffracting surface for light incident upon the diffracting surface. The grooves 14 are separated from each other by lands 20 upon the surface 12. The lands 20 are of predetermined varying width, whereby the diffractive efficiency of the grating 1 varies across the extent or surface of the grating 1.

**Claims**

1. A diffraction grating comprising a surface having grooves therein, each groove having a diffracting surface, the grooves being separated from each other by lands of the first-mentioned surface of predetermined varying width, whereby the diffractive efficiency of the grating varies across the extent of the grating.

2. The grating of claim 1 wherein the diffracting surface of the grooves are non-orthogonal to the first-mentioned surface.

3. The grating of Claim 1 or 2 comprising blazed grooves in a surface, the grooves being separated by unblazed lands of said surface of predetermined varying width.

4. The grating of any preceding claim wherein the width of the lands varies from groove to groove.

5. The grating of any preceding claim wherein the depth of the grooves varies from groove to groove.

6. The grating of any preceding claim wherein the width of a said land varies along its length.

7. The grating of any preceding claim wherein the depth of a said groove varies along its length.

8. The grating of any preceding claim wherein the pitch of the grooves varies across the extent of the grating.

9. A master grating or replicator mould arranged to produce the diffraction grating of any preceding claim.

10. A method of manufacturing the master grating of claim 9, comprising forming on a surface of a substrate a mask defining lands of varying width and removing unmasked material from the substrate to form grooves.

11. The method of claim 10 wherein the substrate comprises a crystal, the method comprising forming said surface of the substrate at an angle relative to a crystal plane of the substrate such that removal of the unmasked material is effected preferentially parallel to the crystal plane.

12. The method of claim 11 comprising removing the unmasked material by anisotropic wet etching.

13. A method of manufacturing a diffraction grating comprising replicating it from a master grating manufactured according to the method of any of claims 11 to 12.

FIG. 1

FIG. 2

Europäisches
Patentamt

European
Patent Office

Office européen
des brevets

## EUROPEAN SEARCH REPORT

Application Number

EP 13 27 5003

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 533 077 A1 (H J P VINK ET AL.) 12 December 2012 (2012-12-12) | 1-3,9-13 | INV. G02B5/18 |
| Y | * paragraphs [0013], [0071], [0072], [0089], [0090]; figures 13, 16 * | 4,5 | |
| Y | US 4 798 446 A (HETTRICK) 17 January 1989 (1989-01-17) * figure 2 * | 4,5 | |

TECHNICAL FIELDS
SEARCHED      (IPC)

G02B

The present search report has been drawn up for all claims

| Place of search | Date of completion of the search | Examiner |
|---|---|---|
| The Hague | 27 March 2013 | Michel, Alain |

EPO FORM 1503 03.82 (P04C01)

## ANNEX TO THE EUROPEAN SEARCH REPORT
## ON EUROPEAN PATENT APPLICATION NO.

EP 13 27 5003

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2013

| Patent document cited in search report | | Publication date | Patent family member(s) | | Publication date |
|---|---|---|---|---|---|
| EP 2533077 | A1 | 12-12-2012 | EP 2533077 A1<br>WO 2012169889 A1 | | 12-12-2012<br>13-12-2012 |
| US 4798446 | A | 17-01-1989 | NONE | | |

EPO FORM P0459

For more details about this annex : see Official Journal of the European Patent Office, No. 12/82